# EUROPEAN PATENT SPECIFICATION

(11) **EP 2 380 137 B1**
(45) Date of publication and mention of the grant of the patent: **05.12.2018**
(21) Application number: 08875477.5
(22) Date of filing: 18.12.2008
(51) Int. Cl.: G06T 11/20

(54) **METHOD AND DEVICE TO SUPERVISE A POWER NETWORK**
VERFAHREN UND EINRICHTUNG ZUR BEAUFSICHTIGUNG EINES STROMVERSORGUNGSNETZES
PROCÉDÉ ET DISPOSITIF POUR SUPERVISER UN RÉSEAU ÉLECTRIQUE

(43) Date of publication of application: 26.10.2011
(73) Proprietor: ABB Schweiz AG, 5400 Baden (CH)
(72) Inventor: FREYHULT, Peter, S-722 18 Västerås (SE); ANDERSSON, Ingeborg, S-723 49 Västerås (SE)
(74) Representative: Ahrengart, Kenneth
(86) International application number: PCT/EP2008/067815
(87) International publication number: WO 2010/069378

(56) References cited:
- SHAFFER D., ET AL.: "Navigating Hierarchically Clustered Networks through Fisheye and Full-Zoom Methods" ACM TRANSACTIONS ON COMPUTER-HUMAN INTERACTION, vol. 3, no. 2, 30 June 1996 (1996-06-30), pages 162-188, XP002541359
- LARSSON M., NUQUI R., JOHANSSON L.-M., BENGTZING S.: "Mapping the weakest link" ABB REVIEW 1/2007, no. 1, 31 December 2007 (2007-12-31), pages 44-48, XP002541360 cited in the application
- WOODRUFF A., LANDAY J., STONEBREAKER M.: "Goal-Directed Zoom" CHI 98, SUMMARY OF THE ACM CONFERENCE ON HUMAN FACTS IN COMPUTING SYSTEMS, 18 April 1998 (1998-04-18), - 23 April 1998 (1998-04-23) pages 305-306, XP002541361
- OVERBYE T.J., WIEGMANN D.A.: "Reducing the risk of major blackouts through improved power system visualization" PROCEEDINGS OF POWER SYSTEM COMPUTATIONAL CONFERENCE 2005, 22 August 2005 (2005-08-22), - 26 August 2005 (2005-08-26) pages 1-8, XP002541362 Liege
- OVERBYE T J ET AL: "Human factors analysis of power system visualizations" SYSTEM SCIENCES, 2001. PROCEEDINGS OF THE 34TH ANNUAL HAWAII INTERNATI ONAL CONFERENCE ON JANUARY 3-6, 2001, PISCATAWAY, NJ, USA,IEEE, 3 January 2001 (2001-01-03), pages 647-652, XP010549642 ISBN: 978-0-7695-0981-5
- JEFFREY HEER ET AL: "prefuse: A Toolkit for Interactive Information Visualization", PROCEEDINGS OF THE SIGCHI CONFERENCE ON HUMAN FACTORS IN COMPUTING SYSTEMS , CHI '05, 2 April 2005 (2005-04-02), - 7 April 2005 (2005-04-07), pages 421-430, XP055115282, New York, New York, USA DOI: 10.1145/1054972.1055031 ISBN: 978-1-58-113998-3

## Description

The invention is related to a method and a device to supervise a power network, where graphical data representing at least a part of the power network are processed by a data processing unit, the processed graphical data are displayed on a graphical display unit as a first visualization of the power network at a less detailed zoom level and where a user request on how to modify the first visualization is processed by the data processing unit, the user request being received from a user input unit.

In the art, different tools are known with which a power network can be supervised. Under the term power network, various network configurations can be summarized, depending on the kind of systems which are connected via the network and depending on the voltage level on the network lines. Such power networks are for example:
- a power generation network interconnecting dispersed energy generation units and energy storage utilities,
- a power distribution network interconnecting power consumer utilities at a lower voltage level and
- a power transmission network interconnecting power generation facilities with power distribution networks at a higher voltage level.

All these different types of power networks need to be continuously monitored and controlled, which is done partly automatically but also partly with the help of human supervisors which use a network supervising tool in order to get information on the status of the power network and in order to interact with the power network by communicating with external control systems connected to the power network. In general, such tools to supervise a geographically distributed system like a power network are summarized under the term SCADA (Supervisory Control And Data Acquisition).

One supervising tool for power networks on the market is Network Manager by ABB. This tool has a graphical user interface (GUI) which presents the supervisor of the power network with all the data he needs to perform his monitoring task. Via the GUI, the supervisor or user may input data by using a text input unit, such as a keyboard, or by using a selection device, such as a mouse or a trackball. The data input by the user are processed by Network Manager and the processed results are either output on the GUI or sent to external systems for storing, further processing or for performing actions on the power network.

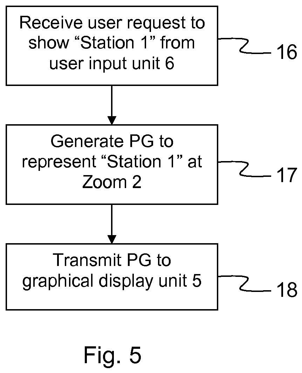

One way known in the art to represent data related to the power network is a so called world map. In such a world map, the power network is shown in a graphical visualization of its geographical distribution, by showing the main objects of the power network, such as power plants, substations and considerable loads, in the form of symbols and by showing the power transmission or distribution lines between these objects in form of links connecting the symbols. An example of a world map shown in the Network Manager can be seen in figure 5 of "Mapping the weakest link" by Mats Larsson et. al, ABB Review 1/2007, pp. 44-48. In 'Navigating Hierarchically Clustered Networks through Fisheye and Full-Zoom Methods', Shaffer D. et al. a method for supervising a power network is disclosed. Selected elements of said power network are displayed in a more detailed zoom levels.

The world map is zoomable, where the user can continuously choose which area of the world map he or she would like to see at which zoom level. The combination of adjusting the zoom level and choosing the area in the zoomed-in map which should be visible on screen is known as "zoom and pan". In order to help the user not to lose the overview of which area of the world map is currently shown, it is known in the art to display a small overview window in addition to the zoomed-in window, where in the overview window a small representation of the zoomed-out world map is seen with a rectangle on top of it which marks the zoomed-in area. The rectangle moves over the world map in the overview window synchronously with any panning performed by the user.

The opportunity to choose the zoom level and pan position freely and continuously is not always experienced as an advantage. For example, if the supervisor of a power network needs to monitor frequently and repeatedly the same different parts of the network, the zoom and pan every time can become quite tedious and time consuming. The concentration of the supervisor is unnecessarily bound to the task of zoom and pan instead of being focused on the actual status of the power network.

Another known way to navigate inside a world map is the possibility to jump between different displays and thereby between different views of the whole map or of portions of the map. With every jump, a new graphical window opens showing the requested view. In this solution, no time-consuming zoom and pan is necessary, but instead it may happen that a considerable number of windows are opened after some operational time, thereby making it difficult to maintain an overview of what is happening in each window and to recognize which window was opened coming from which window, i.e. which window is owned by which.

It is therefore an object of the invention to provide a method and a device to supervise a power network with which the task of a supervisor is facilitated.

This object is achieved by a method according to claim 1 and a device according to claim 7.

According to the invention, there is displayed in the first, less detailed, visualization of the power network at least one selectable element which is selectable via the user input unit and which is assigned to a predefined portion of the power network and to a more detailed zoom level. After a user request is received which indicates that the selectable element was selected by a user, the predefined portion of the power network is displayed at the more detailed zoom level as a second visualization. This second visualization is placed on top of the first visualization.

In the device according to the invention, the above described user request indicating that the selectable element was selected is received by the data processing unit from the user input unit. The data processing unit then causes the graphical display unit in response to that user request to display the predefined portion of power network at the more detailed zoom level.

In other words, a selectable element is presented in the zoomed-out map of the power network which after its selection leads to the display of a pre-selected area of the map at a pre-selected more detailed zoom level on top of the zoomed-out map. Thereby, zoom and pan becomes unnecessary. Instead, just one selection action - usually a mouse-click - is necessary to directly get a zoomed-in visualization. This simplifies the monitoring and control task for the supervisor, since valuable operation time is saved and can be spent on more important issues.

Besides, the result of the one selection action is absolutely reproducable, i.e. the visual impression the supervisor gets from the same area or portion of the power network remains the same for each time he takes a zoomed-in look at it. This will make comparisons of the status of that area at different points in time easier, since differences should mainly been due to differences in status rather than differences in the way the area is displayed.

In addition, the number of visible windows on the screen remains the same, as the zoomed-in portion of the map is placed on top of the zoomed-out map, thereby keeping the map display straightforward and easily manageable. For example it is easily recognizable that the second visualization is owned by the first visualization, and the amount of visible information is limited to the two different visualizations.

In an embodiment of the invention, at least two selectable elements are displayed in the first visualization. After a first user request is received indicating that one of the two selectable elements was selected by the user, the predefined portion of the power network assigned to that one of the two selectable elements is displayed as a second visualization at the corresponding more detailed zoom level. Afterwards, when a further user request is received which indicates that the other of the two selectable elements was selected, the predefined portion of the power network assigned to that other of the two selectable elements is displayed as a third visualization at the corresponding more detailed zoom level, where the second visualization is replaced by the third visualization.

By keeping the number of displayed zoomed-in visualizations to one, the above described advantages are achieved also in case for more than just one selectable elements. Accordingly, it becomes possible for the user to quickly and effortlessly switch between different zoomed-in visualizations, while at the same time the visible information is limited. No extra user actions are necessary in order to close windows which were opened earlier.

In a further embodiment, the second visualization is placed on top of the first visualization close to but not covering the corresponding selectable element. Thereby it is achieved that the user still has an overview of where in the zoomed-out visualization of the power network he currently was working. If in addition the selected element is identified by either marking it or by showing a link between the selected element and the zoomed-in visualization, the user has in addition the possibility to check if the correct element was chosen and where within the power network this element is situated.

In an even further embodiment, the second visualization is placed completely inside the first visualization, in order to keep the same arrangement of graphical windows on the GUI, no matter if the power network is visualized only zoomed-out or also with one additional zoomed-in visualization.

Advantageously, a user request indicating a requested zoom and/or pan action is disabled in the second visualization. Since the second visualization is presented from the beginning with a pre-selected zoom level and pan position, the look-and-feel would be destroyed if those two parameters would afterwards be changed by hand, might it just be by mistake. Especially the advantage with getting always the same reproducible visual information would be given up, if zoom and pan were allowed.

In one embodiment of the invention, the same possible user requests are attached to the first and the second visualization, except that no selectable elements which are assigned to a predefined portion of the power network and to a more detailed zoom level are displayed in the second visualization. In other words, for each of the two graphical windows containing a visualization, the usual user actions as move, resize, hide, select items from menus etc are allowed. The only exception is that within the second visualization no further zoomed-in visualizations can be selected.

In an alternative embodiment, such a selection would instead be allowed, whereby at least one selectable subelement is displayed. The subelement is selectable via the user input unit and is assigned to a predefined subportion of the power network and to an even more detailed zoom level. After a user request is received indicating that the selectable subelement was selected by a user, the predefined subportion of the power network at the even more detailed zoom level is displayed as a fourth visualization on top of the first visualization, replacing the second visualization. This embodiment allows further detailed representations of the power network by maintaining the general advantages of the invention, i.e. by maintaining the number of extra windows on top of the first visualization to one and by pre-selecting the zoom level and pan position.

Other features and advantages of the present invention will become more apparent to a person skilled in the art from the following detailed description in conjunction with the appended drawings in which:
- Fig. 1: shows a simplified power network supervised from a SCADA station,
- Fig. 2: shows a simplified block diagram of the SCADA station of Fig. 1,
- Fig. 3: shows a first visualization of the power network of Fig. 1,
- Fig. 4: shows a second visualization on top of the first visualization of Fig. 3,
- Fig. 5: shows the method steps according to the invention performed by the SCADA station of Fig. 2

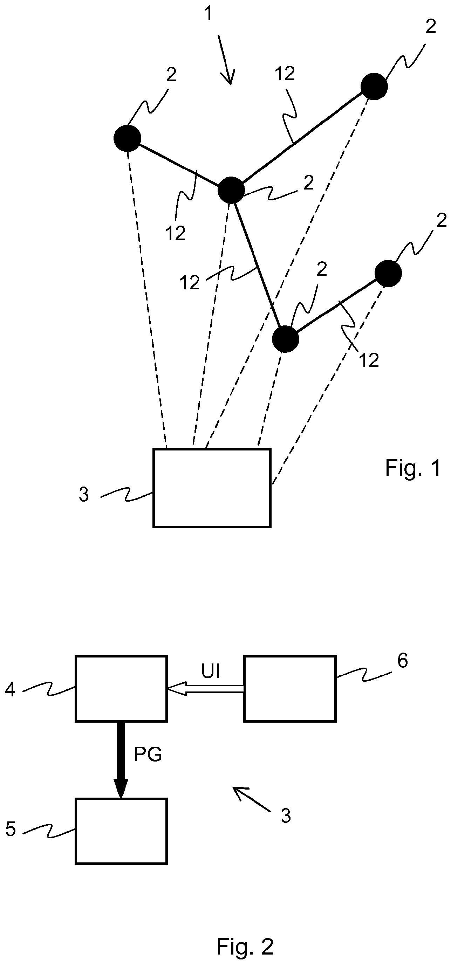

The power network 1 shown in Fig. 1 would be classified as a power transmission network, since it comprises five substations 2 interconnected by high voltage power transmission lines 12. The five substations 2 are linked via data communication channels, which are shown as dashed lines, to a SCADA station, which in this example is just one main computer 3. In bigger power networks, a SCADA station could comprise several servers which itself could be part of a SCADA system comprising several stations. The data communication channels are used for data transfer in both directions, mainly to collect information from the substations 2 about their operational status and about the status of the transmission lines 12 connected to the respective substation 2 and to transmit control information from the main computer 3 to the substations 2.

The main computer 3 shown in Fig. 2 comprises a data processing unit 4 to process all kinds of data, among others the status information collected from the substations 2 and topology information about the setup of the power network 1. The data processing unit 4 is connected to a user input unit 6 in order to receive user input data UI. The user input unit 6 can be any kind of known input device, such as a mouse and/or a keyboard and/or a trackball and/or the touch functionality of a touch screen. The data processing unit 4 is in addition connected to a graphical display unit 5. The processed status information and topology information are transformed by the data processing unit 4 into graphical data PG which represent the power network 1, and the graphical data PG are sent by the data processing unit 4 to the graphical display unit 5 where they are displayed as a first visualization 7 of the power network 1 at a less detailed zoom level Zoom 1.

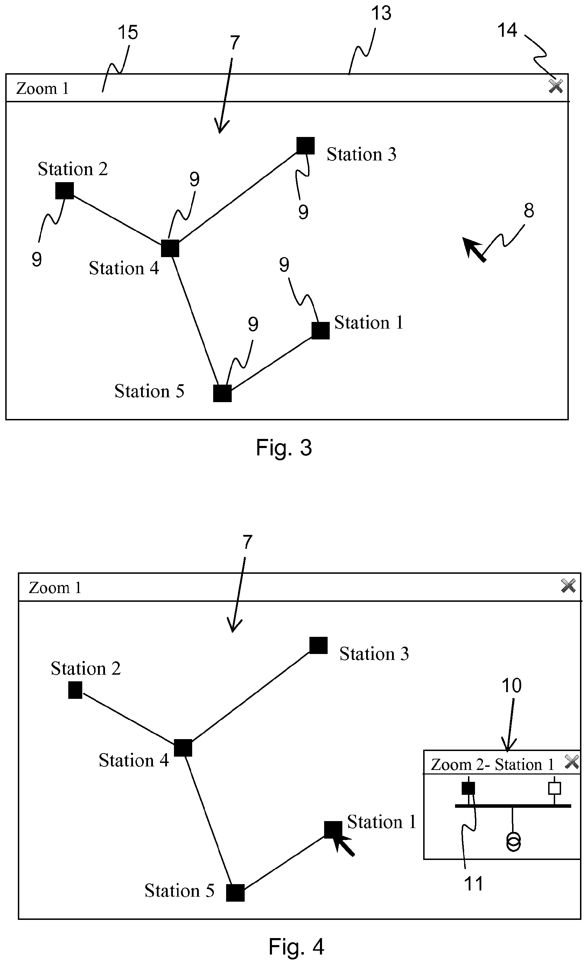

Such a first visualization 7 is shown in Fig. 3, where the substations 2 are represented by icons 9 interconnected by solid lines which represent the power transmission lines 12. In the first visualization, each substation 2 is marked with a unique name. The first visualization 7 is represented in a graphical window 13 which allows the common user input actions as known in the art. This is indicated by the "close window"-cross 14 in the upper right corner of the menu bar 15. Such usual user input actions are for example moving and resizing the window 13, scrolling inside the window 13, choosing action items (not shown) in the menu bar 15 etc. A cursor 8 indicates that the user input unit 6 is connected and waiting for a user input.

The data processing unit 4 has attached to the icons 9 a selection function, i.e. the user may select each of the icons 9 by simply clicking on them. It is assumed that the user has selected icon 9 corresponding to the substation "Station 1". As a result, a second visualization 10 is opened in a second window and displayed on top of the first visualization 7, as shown in Fig. 4. In the second visualization 10, a predefined portion of the power network 1, which is the part which comprises the close environment of the substation "Station 1" and the substation itself, is represented in a more detailed zoom level Zoom 2. The zoom level Zoom 2 as well as the pan position, i.e. which portion of the power network 1 is to be shown, are both predefined parameters which had been attached to the corresponding icon 9. In the example shown in Fig. 4, the second visualization 10 is presented close to the icon 9 of substation "Station 1" without hiding the icon, and the second visualization 10 is placed completely inside the first visualization 7. At the same time, there could be other windows opened on the graphical display unit 5, the presentation of whom would not be disturbed by the second visualization 10. In order to allow the user to adjust the arrangement of the second with respect to the first visualization, user input actions as moving and resizing the second visualization 10 are permitted.

The main steps performed by the data processing unit 4 when reacting on the selection of icon 9 of "Station 1" are depicted in Fig. 5, where in step 16 the user request to show substation "Station 1" in a more detailed representation is received. In the next step 17, the graphical data PG are generated, where the graphical data PG comprise all graphical information which is required in order to show the second visualization 10 of the substation at the correct zoom level and in the correct position on the screen and which is required to present the second visualization 10 with all the functionality desired, which in this embodiment are the same user input actions as possible for the first visualization 7 except for any zoom or pan request. In the following step 18, the graphical data PG is sent to the graphical display unit 5 for displaying.

If the user would, after having seen the visualization of "Station 1", want to see substation "Station 3" in further detail, he would have to click on the corresponding icon 9. As a result, the second visualization 10 would disappear and a third visualization of the substation "Station 3" and its close environment would be opened and displayed at a more detailed zoom level, preferrably at the same position as the second visualization 10. In an alternative embodiment, the third visualization could be displayed at a position close to the icon 9 of substation "Station 3", i.e. a little bit further up to the upper right corner of the first visualization 7. This more detailed zoom level could be exactly the same as used for "Station 1", which would be appropriate if the area of the power network 1 to be shown would have approximately the same size. But it could as well be any other zoom level which is more detailed than the less detailed zoom level Zoom 1.

In the embodiment shown in Fig. 4, there is presented one part of the substation "Station 1" in the second visualization 10 as a selectable icon 11. If the user clicks on icon 11, the second visualization 10 is replaced by a fourth visualization showing a portion of the substation "Station 1" and thereby a subportion of the power network 1 at an even more detailed zoom level.

## Claims

1. Method to supervise a power network (1), where
• data representing at least a part of the power network (1) are processed and transformed into graphical data (PG),
• the graphical data (PG) are displayed on a graphical display unit (5) as a first visualization (7) of the power network (1) at a less detailed zoom level (Zoom 1) and
• a user request on how to modify the first visualization (7) is processed, where the user request is received from a user input unit (6),
• it is displayed in the first visualization (7) at least two selectable elements (9) which are selectable via the user input unit (6) and which are assigned to predefined portions of the power network (1) and to at least one more detailed zoom level (Zoom 2),
• after a user request is received indicating that one of the two selectable elements (9) was selected by a user, the predefined portion of the power network (1) assigned to said one of the two selectable elements (9) is displayed at the corresponding more detailed zoom level (Zoom 2) as a second visualization (10) on top of the first visualization (7), and
• where afterwards, when a user request is received which indicates that the other of the two selectable elements (9) was selected, the predefined portion of the power network (1) assigned to the other of the two selectable elements (9) is displayed as a third visualization at the corresponding more detailed zoom level,
**characterized in that** the second visualization (10) is placed close to but not covering the corresponding selectable element (9) and thereafter replaced by the third visualization at the same position.

2. Method according to claim 1, where a selected element is identified by being marked or showing a link between itself and the corresponding visualization.

3. Method according to claim 1 or 2, where the second visualization (10) is placed completely inside the first visualization (7).

4. Method according to any of claims 1 to 3, where a user request indicating a requested zoom and/or pan action is disabled in the second visualization (10).

5. Method according to any of claims 1 to 4, where the same possible user requests are attached to the first and the second visualization, except that no selectable elements (9) which are assigned to a predefined portion of the power network (1) and to a more detailed zoom level are displayed in the second visualization (10).

6. Method according to any of claims 1 to 4, where the same possible user requests are attached to the first and the second visualization, and where it is displayed in the second visualization (10) at least one selectable subelement (11) which is selectable via the user input unit (6) and which is assigned to a predefined subportion of the power network (1) and to a even more detailed zoom level and where after a user request is received indicating that the selectable subelement (11) was selected by a user, the predefined subportion of the power network (1) at the even more detailed zoom level is displayed as a fourth visualization on top of the first visualization (7), replacing the second visualization (10).

7. Device (3) for supervising a power network (1) comprising
• a data processing unit (4) to process data which represent at least a part of the power network (1) and to transform them into graphical data (PG),
• a graphical display unit (5) to display the graphical data (PG) as a first visualization (7) of the power network (1) at a less detailed zoom level (Zoom 1),
• a user input unit (6) to send user input data (UI) to the data processing unit (4), where the user input data (UI) represent a user request on how to modify the first visualization (7),
• the first visualization (7) comprises at least two selectable elements (9) which are selectable via the user input unit (6) and which is assigned to a predefined portion of the power network (1) and to a more detailed zoom level (Zoom 2), where
• in case that the data processing unit (4) receives a user request which indicates that one of the two selectable elements (9) was selected by a user, the data processing unit (4) causes the graphical display unit (5) to display the predefined portion of the power network (1) assigned to said one of the two selectable elements (9) at a corresponding more detailed zoom level (Zoom 2) as a second visualization (10) on top of the first visualization (7),
• where afterwards, in case the data processing unit receives a user request which indicates that the other of the two selectable elements (9) was selected by the user, the data processing unit causes the graphical display unit to display the predefined portion of the power network (1) assigned to the other of the two selectable elements (9) as a third visualization at a corresponding more detailed zoom level,
**characterized in that** the data processing unit causes the graphical display unit to place the second visualization (10) close to but not covering the corresponding selectable element (9) and thereafter replace it at the same position.

8. Device (3) for supervising a power network (1) according to claim 7, where a selected element is identified by being marked or showing a link between itself and the corresponding visualization.

## Patentansprüche

1. Verfahren zum Überwachen eines Energienetzwerks (1), wobei
• Daten, die mindestens einen Teil des Energienetzwerks (1) repräsentieren, verarbeitet und in grafische Daten (PG) umgewandelt werden,
• die grafischen Daten (PG) auf einer grafischen Anzeigeeinheit (5) als eine erste Visualisierung (7) des Energienetzwerks (1) in einer weniger detaillierten Zoomstufe (Zoom 1) angezeigt werden und
• eine Benutzeranforderung dazu, wie die erste Visualisierung (7) zu modifizieren ist, verarbeitet wird, wobei die Benutzeranforderung von einer Benutzereingabeeinheit (6) empfangen wird,
• in der ersten Visualisierung (7) mindestens zwei auswählbare Elemente (9) angezeigt werden, die via die Benutzereingabeeinheit (6) auswählbar sind und die vordefinierten Abschnitten des Energienetzwerks (1) und mindestens einer detaillierteren Zoomstufe (Zoom 2) zugeordnet sind,
• nachdem eine Benutzeranforderung empfangen wurde, die anzeigt, dass eines der zwei auswählbaren Elemente (9) von einem Benutzer ausgewählt wurde, der vordefinierte Abschnitt des Energienetzwerks (1), der dem einen der zwei auswählbaren Elemente (9) zugeordnet ist, in der entsprechenden detaillierteren Zoomstufe (Zoom 2) als eine zweite Visualisierung (10) auf der ersten Visualisierung (7) angezeigt wird, und
• wobei danach, wenn eine Benutzeranforderung empfangen wird, die anzeigt, dass das andere der zwei auswählbaren Elemente (9) ausgewählt wurde, der vordefinierte Abschnitt des Energienetzwerks (1), der dem anderen der zwei auswählbaren Elemente (9) zugeordnet ist, als eine dritte Visualisierung in der entsprechenden detaillierteren Zoomstufe angezeigt wird,
**dadurch gekennzeichnet, dass** die zweite Visualisierung (10) in der Nähe des entsprechenden auswählbaren Elements (9) platziert wird, dieses aber nicht abdeckt, und anschließend durch die dritte Visualisierung in derselben Position ersetzt wird.

2. Verfahren nach Anspruch 1, wobei ein ausgewähltes Element dadurch identifiziert ist, dass es markiert ist oder einen Link zwischen sich selbst und der entsprechenden Visualisierung zeigt.

3. Verfahren nach Anspruch 1 oder 2, wobei die zweite Visualisierung (10) vollständig in der ersten Visualisierung (7) platziert wird.

4. Verfahren nach einem der Ansprüche 1 bis 3, wobei eine Benutzeranforderung, die eine angeforderte Zoom- und/oder Schwenkaktion anzeigt, in der zweiten Visualisierung (10) deaktiviert ist.

5. Verfahren nach einem der Ansprüche 1 bis 4, wobei dieselben möglichen Benutzeranforderungen an die erste und die zweite Visualisierung angehängt werden, außer dass in der zweiten Visualisierung (10) keine auswählbaren Elemente (9), die einem vordefinierten Abschnitt des Energienetzwerks (1) und einer detaillierteren Zoomstufe zugeordnet sind, angezeigt werden.

6. Verfahren nach einem der Ansprüche 1 bis 4, wobei dieselben möglichen Benutzeranforderungen an die erste und die zweite Visualisierung angehängt werden und wobei in der zweiten Visualisierung (10) mindestens ein auswählbares Unterelement (11), das via die Benutzereingabeeinheit (6) auswählbar ist und das einem vordefinierten Unterabschnitt des Energienetzwerks (1) und einer noch detaillierteren Zoomstufe zugeordnet ist, angezeigt wird und wobei, nachdem eine Benutzeranforderung empfangen wurde, die anzeigt, dass das auswählbare Unterelement (11) von einem Benutzer ausgewählt wurde, der vordefinierte Unterabschnitt des Energienetzwerks (1) in einer noch detaillierteren Zoomstufe als eine vierte Visualisierung auf der ersten Visualisierung (7) angezeigt wird und die zweite Visualisierung (10) ersetzt.

7. Vorrichtung (3) zum Überwachen eines Energienetzwerks (1), die Folgendes umfasst
• eine Datenverarbeitungseinheit (4) zum Verarbeiten von Daten, die mindestens einen Teil des Energienetzwerks (1) repräsentieren, und zum Umwandeln dieser in grafische Daten (PG),
• eine grafische Anzeigeeinheit (5) zum Anzeigen der grafischen Daten (PG) als eine erste Visualisierung (7) des Energienetzwerks (1) in einer weniger detaillierten Zoomstufe (Zoom 1),
• eine Benutzereingabeeinheit (6) zum Senden von Benutzereingabedaten (UI) an die Datenverarbeitungseinheit (4), wobei die Benutzereingabedaten (UI) eine Benutzeranforderung dazu, wie die erste Visualisierung (7) zu modifizieren ist, repräsentieren,
• wobei die erste Visualisierung (7) mindestens zwei auswählbare Elemente (9) umfasst, die via die Benutzereingabeeinheit (6) auswählbar sind und die einem vordefinierten Abschnitt des Energienetzwerks (1) und einer detaillierteren Zoomstufe (Zoom 2) zugeordnet ist, wobei
• in dem Fall, in dem die Datenverarbeitungseinheit (4) eine Benutzeranforderung empfängt, die anzeigt, dass eines der zwei auswählbaren Elemente (9) von einem Benutzer ausgewählt wurde, die Datenverarbeitungseinheit (4) die grafische Anzeigeeinheit (5) veranlasst, den vordefinierten Abschnitt des Energienetzwerks (1), der dem einen der zwei auswählbaren Elemente (9) zugeordnet ist, in einer entsprechenden detaillierteren Zoomstufe (Zoom 2) als eine zweite Visualisierung (10) auf der ersten Visualisierung (7) anzuzeigen,
• wobei danach, falls die Datenverarbeitungseinheit eine Benutzeranforderung empfängt, die anzeigt, dass das andere der zwei auswählbaren Elemente (9) vom Benutzer ausgewählt wurde, die Datenverarbeitungseinheit die grafische Anzeigeeinheit veranlasst, den vordefinierten Abschnitt des Energienetzwerks (1), der dem anderen der zwei auswählbaren Elemente (9) zugeordnet ist, in einer entsprechenden detaillierteren Zoomstufe als eine dritte Visualisierung anzuzeigen,
**dadurch gekennzeichnet, dass** die Datenverarbeitungseinheit die grafische Anzeigeeinheit veranlasst, die zweite Visualisierung (10) in der Nähe des entsprechenden auswählbaren Elements (9) zu platzieren, dieses aber nicht abzudecken, und es anschließend in derselben Position zu ersetzen.

8. Vorrichtung (3) zum Überwachen eines Energienetzwerks (1) nach Anspruch 7, wobei ein ausgewähltes Element dadurch identifiziert ist, dass es markiert ist oder einen Link zwischen sich selbst und der entsprechenden Visualisierung zeigt.

## Revendications

1. Procédé de supervision d'un réseau électrique (1), dans lequel
- des données représentant au moins une partie du réseau électrique (1) sont traitées et transformées en données graphiques (PG),
- les données graphiques (PG) sont affichées sur une unité d'affichage graphique (5) sous la forme d'une première visualisation (7) du réseau électrique (1) avec un niveau de zoom moins détaillé (Zoom 1) et
- une demande d'utilisateur sur la façon de modifier la première visualisation (7) est traitée, lorsque la demande d'utilisateur est reçue d'une unité d'entrée d'utilisateur (6),
- il est affiché, dans la première visualisation (7), au moins deux éléments sélectionnables (9) qui peuvent être sélectionnés par l'intermédiaire de l'unité d'entrée d'utilisateur (6) et qui sont affectés à des parties prédéfinies du réseau électrique (1) et avec au moins un niveau de zoom plus détaillé (Zoom 2),
- après réception d'une demande d'utilisateur indiquant que l'un des deux éléments sélectionnables (9) a été sélectionné par un utilisateur, la partie prédéfinie du réseau électrique (1) affectée audit un des deux éléments sélectionnables (9) est affichée avec un niveau de zoom plus détaillé correspondant (Zoom 2) en tant que deuxième visualisation (10) par-dessus la première visualisation (7), et
- où, ensuite, lors de la réception d'une demande d'utilisateur indiquant que l'autre des deux éléments sélectionnables (9) a été sélectionné, la partie prédéfinie du réseau électrique (1) affectée à l'autre des deux éléments sélectionnables (9) est affichée comme sous la forme d'une troisième visualisation avec un niveau de zoom plus détaillé correspondant, **caractérisé en ce que** la deuxième visualisation (10) est placée à proximité de l'élément sélectionnable correspondant (9), mais sans le recouvrir, puis, est ensuite remplacée par la troisième visualisation à la même position.

2. Procédé selon la revendication 1, dans lequel un élément sélectionné est identifié par un marquage ou par le fait qu'il présente une liaison entre lui-même et la visualisation correspondante.

3. Procédé selon la revendication 1 ou la revendication 2, dans lequel la deuxième visualisation (10) est placée complètement à l'intérieur de la première visualisation (7).

4. Procédé selon l'une quelconque des revendications 1 à 3, dans lequel une demande d'utilisateur indiquant une action demandée de zoom et/ou de panoramique est désactivée dans la deuxième visualisation (10).

5. Procédé selon l'une quelconque des revendications 1 à 4, dans lequel les mêmes demandes possibles de l'utilisateur sont rattachées à la première visualisation et à la deuxième visualisation, hormis le fait qu'aucun élément sélectionnable (9) qui est affecté à une partie prédéfinie du réseau électrique (1) et avec un niveau de zoom plus détaillé n'est affiché dans la deuxième visualisation (10).

6. Procédé selon l'une quelconque des revendications 1 à 4, dans lequel les mêmes demandes possibles de l'utilisateur sont rattachées à la première et à la deuxième visualisations, et où il est affiché dans la deuxième visualisation (10) au moins un sous-élément sélectionnable (11) qui peut être sélectionné par l'intermédiaire de l'unité d'entrée d'utilisateur (6) et qui est affecté à une sous-partie prédéfinie du réseau électrique (1) et avec un niveau zoom encore plus détaillé, et où, après réception d'une demande d'utilisateur indiquant que le sous-élément sélectionnable (11) a été sélectionné par un utilisateur, la sous-partie prédéfinie du réseau électrique (1) avec un niveau de zoom encore plus détaillé est affichée sous la forme d'une quatrième visualisation par-dessus la première visualisation (7), en remplacement de la deuxième visualisation (10).

7. Dispositif (3) de supervision d'un réseau électrique (1) comprenant :
- une unité de traitement de données (4) pour traiter des données qui représentent au moins une partie du réseau électrique (1) et pour les transformer en données graphiques (PG),
- une unité d'affichage graphique (5) pour afficher les données graphiques (PG) sous la forme d'une première visualisation (7) du réseau électrique (1) avec un niveau de zoom moins détaillé (Zoom 1),
- une unité d'entrée d'utilisateur (6) pour envoyer des données d'entrée d'utilisateur (UI) à l'unité de traitement de données (4), où les données d'entrée d'utilisateur (UI) représentent une demande d'utilisateur sur la façon de modifier la première visualisation (7),
- la première visualisation (7) comprend au moins deux éléments sélectionnables (9) qui peuvent être sélectionnés par l'intermédiaire de l'unité d'entrée d'utilisateur (6) et qui est affectée à une partie prédéfinie du réseau électrique (1) et avec un niveau de zoom plus détaillé (Zoom 2), où
- dans le cas où l'unité de traitement de données (4) reçoit une demande d'utilisateur qui indique que l'un des deux éléments sélectionnables (9) a été sélectionné par un utilisateur, l'unité de traitement de données (4) amène l'unité d'affichage graphique (5) à afficher la partie prédéfinie du réseau électrique (1) affectée audit un des deux éléments sélectionnables (9) avec un niveau de zoom plus détaillé correspondant (Zoom 2) sous la forme d'une deuxième visualisation (10) par-dessus la première visualisation (7),
- où, ensuite, dans le cas où l'unité de traitement de données reçoit une demande d'utilisateur qui indique que l'autre des deux éléments sélectionnables (9) a été sélectionné par l'utilisateur, l'unité de traitement de données amène l'unité d'affichage graphique à afficher la partie prédéfinie du réseau électrique (1) affectée à l'autre des deux éléments sélectionnables (9) sous la forme d'une troisième visualisation avec un niveau de zoom plus détaillé correspondant,
**caractérisé en ce que** l'unité de traitement de données amène l'unité d'affichage graphique à placer la deuxième visualisation (10) à proximité de l'élément sélectionnable correspondant (9), mais sans le recouvrir puis, à le remplacer ensuite à la même position.

8. Dispositif (3) de supervision d'un réseau électrique (1) selon la revendication 7, dans lequel un élément sélectionné est identifié par un marquage ou par le fait qu'il présente une liaison entre lui-même et la visualisation correspondante.
